# EUROPÄISCHE PATENTANMELDUNG

(11) **EP 2 308 756 A2**
(43) Veröffentlichungstag der Anmeldung: **13.04.2011**
(21) Anmeldenummer: 10009460.6
(22) Anmeldetag: 10.09.2010
(51) Int. Cl.: B64F 1/28

(54) **Stützmast zum Abstützen und Verfahren eines Pantographen**

(30) Priorität: 06.10.2009 DE 102009048430; 05.02.2010 DE 102010007144; 05.02.2010 DE 202010002024 U
(71) Anmelder: Nutzfahrzeuge Rohr GmbH, 94315 Straubing (DE)
(72) Erfinder: Pfeiffer, Franz, 89165 Dietenheim (DE)
(74) Vertreter: advotec.

(57) **Zusammenfassung**

Stützmast (10) zum Abstützen und Verfahren eines Pantographen (2), wobei der Stützmast teleskopartig ausziehbar ist und im teilweise oder ganz ausgezogenen Zustand in dieser Position über mindestens einen Bremsmechanismus (14) fixierbar ist.

## Beschreibung

Die vorliegende Erfindung betrifft einen Stützmast zum Abstützen und Verfahren eines Pantographen. Die vorliegende Erfindung betrifft ferner eine Betankungsvorrichtung, insbesondere zum Betanken von Flugzeugen.

Der erfindungsgemäße Stützmast bzw. die erfindungsgemäße Betankungsvorrichtung sind in der Regel auf oder an einem Flugzeugbetankungsfahrzeug angeordnet.

Aus dem Stand der Technik sind verschiedene Systeme zur Flugzeugbetankung bekannt. So kann die Betankung der Flugzeuge mittels Tankfahrzeugen vorgenommen werden. Hierbei fährt das Tankfahrzeug zu dem zu betankenden Flugzeug, setzt den Schlauch an und betankt das Flugzeug. Bei größeren Fahrzeugen werden hier insbesondere Sattelzug-Tankfahrzeuge eingesetzt.
Ferner sind so genannte Dispenser-Fahrzeuge bekannt. Dispenser-Fahrzeuge werden auf Flughäfen eingesetzt, die über ein unterirdisches Hydrantensystem für Kerosin verfügen. D. h., dass im Boden Rohrleitungen verlegt sind, die an bestimmten Stellen, nämlich an den Flugzeugparkplätzen Hydranten aufweisen, an denen Schläuche zur Betankung der Flugzeuge angeschlossen werden können. Derartige Dispenser-Fahrzeuge zeichnen sich durch eine Einrichtung zum Messen, Filtern und Regeln der geförderten Kerosinmenge aus, wobei diese Mess-, Filter- und Regeleinrichtung durch eine Schlauchleitung mit dem Hydranten verbunden wird.
Die Verbindung vom Dispenser-Fahrzeug zum Flugzeug selbst erfolgt ebenfalls über Schlauchleitungen, wobei die Schlauchleitungen entweder an einer Hubplattform angelenkt, oder aber auf Schlauchtrommeln aufgewickelt sind, von denen sie bei Bedarf entsprechend der gewünschten Länge abgewickelt werden müssen.
Am vorderen Ende dieser Schlauchleitung befindet sich die Flugzeugbetankungskupplung. Diese Betankungskupplung muss über Kopf mit dem sogenannten Flugzeugbetankungsstutzen verbunden werden, was mit einem erheblichen Kraftaufwand verbunden ist, da in einem solchen Fall ca. 15 - 20 kg zu heben sind. Ist der Betankungsstutzen dann mit der Flugzeugbetankungskupplung verbunden, wirken auf die Flugzeugbetankungsstutzen starke Zugbelastungen durch das hohe Gewicht der Schläuche.

Um diesen Nachteil zu mindern, wird in DE 10 2005 053 206 vorgeschlagen, den Tank des Betankungsfahrzeuges über eine Verbindungseinrichtung mit mindestens zwei Rohrelementen, die gelenkig miteinander verbunden sind, mit dem Betankungsadapter des Flugzeuges zu verbinden. Der Nachteil bei dieser Konstruktion besteht in erster Linie darin, dass die gelenkig miteinander verbundenen Rohrelemente nicht gegen ein Zusammenklappen gesichert sind. Die Rohrelemente in dieser Druckschrift werden vielmehr mit der Hubbühne, auf der der Tankwart steht, mitgenommen und abgestützt. Ein Absenken der Hubbühne im ausgefahrenen Zustand der Verbindungseinrichtung ist äußerst gefährlich, zumal die gesamte Vorrichtung lediglich durch einen ausfahrbaren Zylinder abgestützt wird.

Der vorliegenden Erfindung liegt die Aufgabe zugrunde, die Nachteile der Flugzeugbetankungsvorrichtungen aus dem Stand der Technik zu überwinden. Der vorliegenden Erfindung liegt insbesondere die Aufgabe zugrunde, eine Möglichkeit zu schaffen, mit der ein sicheres Betanken eines Flugzeuges auch bei abgesenkter Hubbühne möglich ist, wobei gleichzeitig eine Entlastung der Betankungskupplungen möglich ist.

Diese Aufgabe wird gelöst durch einen Stützmast zum Abstützen und Verfahren eines Pantographen, wobei der Stützmast teleskopartig ausziehbar ist und im teilweise oder ganz ausgezogenen Zustand in dieser Position über mindestens einen Bremsmechanismus fixierbar ist.

Die Aufgabe wird ferner gelöst durch eine Betankungsvorrichtung, insbesondere zum Betanken von Flugzeugen, mit einem Pantographen, umfassend mindestens eine Rohrleitung, mindestens eine Schlauchleitung sowie mindestens eine an der Schlauchleitung angeordnete Flugzeugsbetankungskupplung, und mit einem erfindungsgemäßen Stützmast.

Unter einem Pantographen wird in diesem Zusammenhang eine Verbindungseinrichtung zwischen einer Treibstoffquelle (in der Regel ein Tank eines Betankungsfahrzeuges) und dem Betankungsadapter eines Flugzeuges verstanden, welche in der Regel mindestens zwei gelenkartig miteinander verbundene Rohrleitungen, mindestens einen Betankungsschlauch mit mindestens eine Betankungskupplung umfasst.

Der erfindungsgemäße Stützmast bzw. die erfindungsgemäße Betankungsvorrichtung ist in der Regel an einem Betankungsfahrzeug angeordnet.

Durch den erfindungsgemäßen Stützmast wird erreicht, dass ein Pantograph, welcher am Stützmast angeordnet ist, sicher von einer Treibstoffquelle (z. B. Betankungsfahrzeug) zur Andockstation an einem Flugzeug und wieder zurück verfahren werden kann. Durch die Fixierung des Stützmastes im ausgezogenen Zustand durch den Bremsmechanismus wird in idealer Weise erreicht, dass der Pantograph während des Betankungsvorgangs auch ohne Unterstützung der Hubbühne sicher gehalten werden kann. Dadurch ist es möglich, dass ein Tankwart während des Betankungsvorganges mit der Hubbühne nach unten fahren und dort den Betankungsvorgang steuern kann.
Mit Hilfe des Pantographen der erfindungsgemäßen Betankungsvorrichtung ist es möglich, nur sehr kurze Schlauchleitungen einzusetzen. Dies hat insbesondere den Vorteil, dass die Zugkräfte während des Betankens an den Betankungsadaptern eines Flugzeuges sehr gering sind.

In aller Regel ist der erfindungsgemäße Stützmast passiv, vorzugsweise mit Hilfe einer Hubbühne ausziehbar und weist vorzugsweise keinen eigenen Antrieb auf. Dies vereinfacht die Gesamtkonstruktion und trägt wesentlich zu einer kostengünstigen Herstellung bei.

Bei einer besonders bevorzugten Ausführungsform des erfindungsgemäßen Stützmastes ist dieser im fixierten Zustand nicht absenkbar (einziehbar), vorzugsweise jedoch weiter ausziehbar. Die Tatsache, dass der erfindungsgemäße Stützmast im fixierten Zustand nicht absenkbar ist, gewährleistet die nötige hohe Zuverlässig beim Abstützen des Pantographen gegen ein Absinken oder Abstürzen dieses Leitungssystems, da hieraus resultierende Schäden immens wären. Durch die bevorzugte Variante, dass der erfindungsgemäße Stützmast im fixierten Zustand sehr wohl weiter ausziehbar ist, wird erreicht, dass Schäden auch beim Überfahren der Berührungsposition zwischen Hubbühne und Stützmast vermieden werden. Von besonderem Vorteil ist also, dass ohne zeitliche Abhängigkeit einer Steuerung ein Überfahren der Berührungsposition geschehen kann.

Durch die Tatsache, dass der erfindungsgemäße Stützmast teleskopartig ausziehbar ist, ist in der Regel auch ein stufenloses Höhenverstellen dieses Mastes möglich. Dadurch ist es möglich, dass die Höhe des Stützmastes auch zentimetergenau eingestellt werden kann.

Eine besonders bevorzugte Ausführungsform des erfindungsgemäßen Stützmastes ist gekennzeichnet durch mindestens ein Bremsmodul, umfassend eine mit einer bewegbaren Teleskopstufe des Stützmastes verbundene und mit dieser bewegbare Stützstange sowie zwei an die Stützstange anpressbare Bremsbacken, wobei jede Bremsbacke mit einer Zahnplatte verbunden ist, welche Zahnplatten ineinandergreifend angeordnet sind und die Bremsbacken, insbesondere bei Belastung der Stützstange durch das Eigengewicht des Pantographen, an die Stützstange pressen können. Durch das genannte Bremsmodul kann beispielsweise erreicht werden, dass der Stützmast nach einem Ausfahren durch Mitnahme durch eine Hubbühne und nach einem anschließenden Absenken dieser Hubbühne, was dazu führt, dass der Pantograph nicht mehr durch die Hubbühne angestützt wird, sondern das Eigengewicht dieses Pantographen alleine auf dem Stützmast lastet, durch ein Anpressen der Bremsbacken an die Stützstange stabil und fest in dieser ausgezogenen Position gehalten wird. Ein in sich Zusammensinken des Stützmastes wird somit automatisch, nur durch die Belastung des Stützmastes (und damit auch der Stützstange) durch das Gewicht des Pantographen, welches das Bremsmodul so zu sagen aktiviert, verhindert.

Vorzugsweise wirken die Zahnplatten als Kniehebel auf die Bremsbacken. Durch diese Kniehebelwirkung wird die Aktivierung der Klemmung und somit die Bremskraft verstärkt.

Mit Vorteil ist mindestens eine, vorzugsweise eine Zahnplatte mit einem Betätigungsmittel, vorzugsweise einem Pneumatikzylinder betätigbar, welches Betätigungsmittel die Zahnplatten und damit auch die Bremsbacken von einem verriegelten in einen entriegelten Zustand und vorzugsweise auch umgekehrt überführen können. In der Regel ist das Betätigungsmittel über eine Steuerung betätigbar, wobei das Betätigungsmittel, insbesondere durch das Entnehmen eines Betankungsstutzens von einer Haltestation das Signal erhält, die Zahnplatte nicht mehr zu betätigen, und wobei das Betätigungsmittel vorzugsweise durch ein Signal durch die Berührung einer Hubbühne am Hubmast oder Pantographen den Befehl erhält, die Zahnplatte zu betätigen (kontaktieren) und den Bremsmechanismus zu entriegeln. Beim Ausfahren des erfindungsgemäßen Stützmastes ist das Bremsmodul (Bremsmechanismus) in der Regel entriegelt, so dass die Bremsbacken nicht an der Stützstange anliegen, um unnötigen Abrieb der Bremsbeläge zu vermeiden. Im Falle eines Pneumatikzylinders als Betätigungsmittel ist dieser im entriegelten Zustand des Bremsmoduls ausgefahren und drückt gegen eine der Zahnplatten. Dies führt wiederum zur Entriegelung des Bremsmoduls. Wird dann von einer Bedienperson auf der Hebebühne eine Betankungskupplung von einer Haltevorrichtung entnommen, erhält der Pneumatikzylinder das Signal, drucklos zu werden, so dass die Zylinderstange dieses Zylinders zurückfährt. Dadurch wird das Bremsmodul automatisch durch mechanische Belastung durch das Eigengewicht der Gesamtvorrichtung von einem entriegelten in einen verriegelten Zustand überführt, sodass der Hubmast stabil im ausgefahrenen Zustand verbleibt und die Hubbühne mit der Bedienperson ohne den Stützmast nach unten gefahren werden kann. Dann kann die Bedienperson vom Boden aus den Betankungsvorgang starten. In diesem belasteten und verriegelten Zustand des Stützmastes kann das Bremsmodul nicht entriegelt werden. Die Kraft des Betätigungsmittels (Pneumatikzylinders) würde für eine Entriegelung nicht ausreichen.

Daher kann es zu keinem Unfall kommen. Erst wenn die Hubbühne nach oben fährt und den Stützmast durch Unterstützung entlastet, kann entriegelt werden, sodass der Hubmast wieder eingefahren werden kann.

Mit Vorteil weisen die Bremsbacken einen reibungserhöhenden Bremsbelag, insbesondere einen Gummibelag auf, wobei die Stützstange vorzugsweise keine glatte Oberfläche aufweist, sondern z. B. als Gewindestange oder Zahnstange ausgebildet ist. Durch die Erhöhung der Reibung zwischen der Stützstange und den Bremsbacken wird eine Steigerung der Bremswirkung erreicht (siehe Figurenbeschreibung).

Bei einer bevorzugten Ausführungsform des erfindungsgemäßen Stützmastes kann die Stützstange auch im verriegelten Zustand der Zahnplatten und Bremsbacken nach oben aus den Bremsbacken gezogen werden. Dies bringt die oben genannten Vorteile (keine Beschädigung beim Überfahren der Berührungsposition durch eine Hubbühne).

Eine weitere Ausführungsform des erfindungsgemäßen Stützmastes ist gekennzeichnet durch mindestens ein Bremsmodul, umfassend eine mit einer bewegbaren Teleskopstufe des Stützmastes verbundene und mit dieser bewegbare Zahnstange sowie ein schwenkbar gelagertes, in die Zahnstange eingreifbares Arretierungselement, welches insbesondere bei Belastung der Zahnstange durch das Eigengewicht des Pantographen mit der Zahnstange verrastet. Das Arretierungselement ist vorzugsweise mit einer Steuerung des Stützmastes verbunden. Das Arretierungselement kann beispielsweise eine Arretierungsklappe, ein Arretierungsbolzen, ein Arretierungsstift etc. sein. Die genannte Ausführungsform ist in der Figurenbeschreibung näher beschrieben.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1:: eine erfindungsgemäße Betankungsvorrichtung mit ausgezogenem Stützmast;
- Figur 2:: die Betankungsvorrichtung von Figur 1 mit eingezogenem Stützmast;
- Figur 3:: eine perspektivische Darstellung eines erfindungsgemäßen Stützmastes (ohne Pantographen);
- Figur 4:: eine schematische Darstellung eines erfindungsgemäßen Stützmastes im verriegelten Zustand;
- Figur 5:: eine schematische Darstellung eines erfindungsgemäßen Stützmastes im entriegelten Zustand;
- Figur 6:: eine schematische Darstellung einer weiteren Ausführungsform eines erfindungsgemäßen Stützmastes im entriegelten Zustand;
- Figur 7:: eine schematische Darstellung des Stützmastes von Figur 6 im verriegelten Zustand.

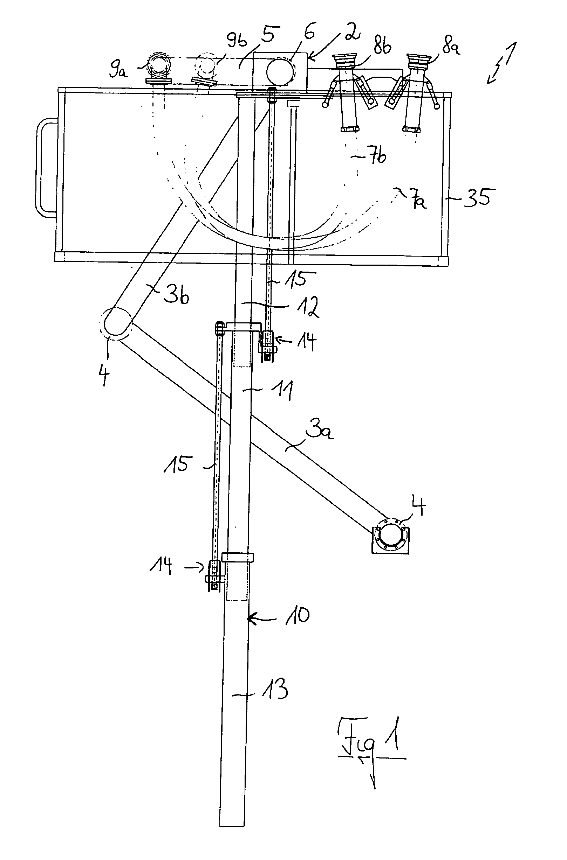

Figur 1 zeigt eine erfindungsgemäße Betankungsvorrichtung 1 mit einem Pantographen 2, welcher zwei Rohrleitungen 3a, 3b umfasst, die über ein Drehgelenk 4 gelenkig miteinander verbunden sind. Der Pantograph 2 umfasst ferner ein Verteilerrohr 5, welches über ein Drehgelenk 6 mit der Rohrleitung 3b gelenkig verbunden ist. Am Verteilerrohr 5 sind zwei Schlauchleitungen 7a und 7b angeschlossen, welche an ihren freien Enden jeweils eine Betankungskupplung 8a und 8b aufweisen. Die Schlauchleitungen 7a und 7b sind über Drehgelenke 9a und 9b gelenkig mit dem Verteilerrohr 5 verbunden. Die Rohrleitung 3a mündet an ihrem unteren Ende in einem hier nicht dargestellten Tank eines Betankungsfahrzeuges.

Der Pantograph 2 ist an einem teleskopisch aus- und einfahrbaren Stützmast 10 befestigt. Dieser Stützmast 10 weist eine erste Teleskopstufe 11 und eine zweite Teleskopstufe 12 auf, die sich im eingeschobenen Zustand in der Basishülse 13 des Stützmastes 10 befinden. Der Stützmast 10 hat keinen eigenen Antrieb, sondern wird passiv mit Hilfe einer Hubbühne ausgefahren, die den Stützmast 10 beim Hochfahren an der Unterseite einer Stange oder Platte am oberen Ende der zweiten Teleskopstufe 12 angreift. Beim Ausfahren des Stützmastes 10 wird das Verteilerrohr 5 und die Schlauchleitungen 7a und 7b des Pantographen 2 direkt mit nach oben gefahren. Die gelenkig miteinander verbundenen Rohrleitungen 3a und 3b, die im eingefahrenen Zustand des Stützmastes 10 zusammengeklappt vorliegen, werden beim Hochfahren des Stützmastes 10 ähnlich einer Schere auseinander gefahren und mit nach oben gezogen.

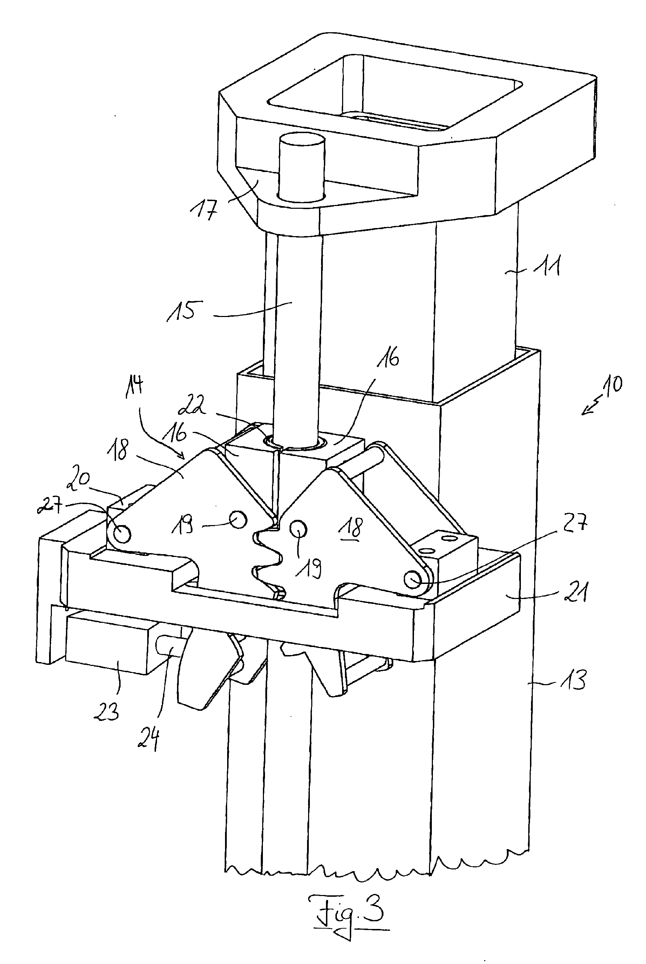

An der Basishülse 13 und an der ersten Teleskopstufe 11 des Stützmastes 10 ist jeweils ein Bremsmodul 14 angeordnet. Der genaue Aufbau und die Wirkungsweise dieser Bremsmodule ist in Figur 3 dargestellt. Ein wesentliches Element eines Bremsmoduls ist eine Stützstange 15, welche die Basishülse 13 und die erste Teleskopstufe 11 bzw. die erste Teleskopstufe 11 und die zweite Teleskopstufe 12 miteinander verbinden. Ferner ist die Hubbühne 35 zu sehen, welche den Pantographen 2 mitnimmt.

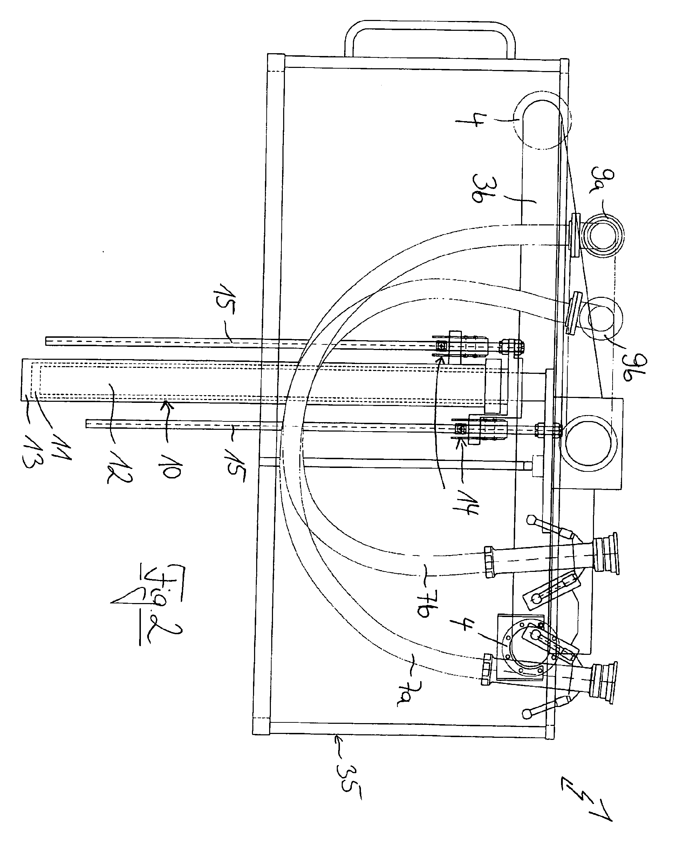

Figur 2 zeigt die Betankungsvorrichtung 1 mit eingezogenem Stützmast 10.

Figur 3 zeigt den Stützmast 10 von Figur 1 im Bereich des Bremsmoduls 14 zwischen der Basishülse 13 und der ersten Teleskopstufe 11. Der besseren Übersicht halber wurden in dieser Darstellung der Pantograph und die zweite Teleskopstufe weggelassen. In dieser Darstellung ist der Stützmast 10 im fast ganz eingeschobenen Zustand dargestellt.
Das Bremsmodul 14 ist in dieser Darstellung in einer verriegelten Position, also in einer Bremsstellung dargestellt. Das Bremsmodul 14 umfasst eine Stützstange 15, sowie zwei an die Stützstange 15 anpressbare Bremsbacken 16. Die Stützstange 15 ist mit der ersten Teleskopstufe 11 fest verbunden, indem die Stützstange 15 in eine Aussparung einer Ausbuchtung (17) am oberen Ende der ersten Teleskopstufe 11 eingeschweißt ist. Die Stützstange 15 kann mit der ersten Teleskopstufe 11 auch beispielsweise fest verschraubt sein.

Jede der beiden Bremsbacken 16 ist mit einer Zahnplatte 18 über Bolzen 19 verbunden. Die Zahnplatten 18 sind derartig angeordnet, dass sie mit ihren Zähnen ineinandergreifen. Die Zahnplatten 18 sind ihrerseits jeweils an einem Halteblock 20 schwenkbar gelagert. Die Halteblöcke 20 sind ihrerseits an einer Halterung 21, die wiederum mit der Basishülse 13 des Stützmastes 10 verbunden ist, befestigt.

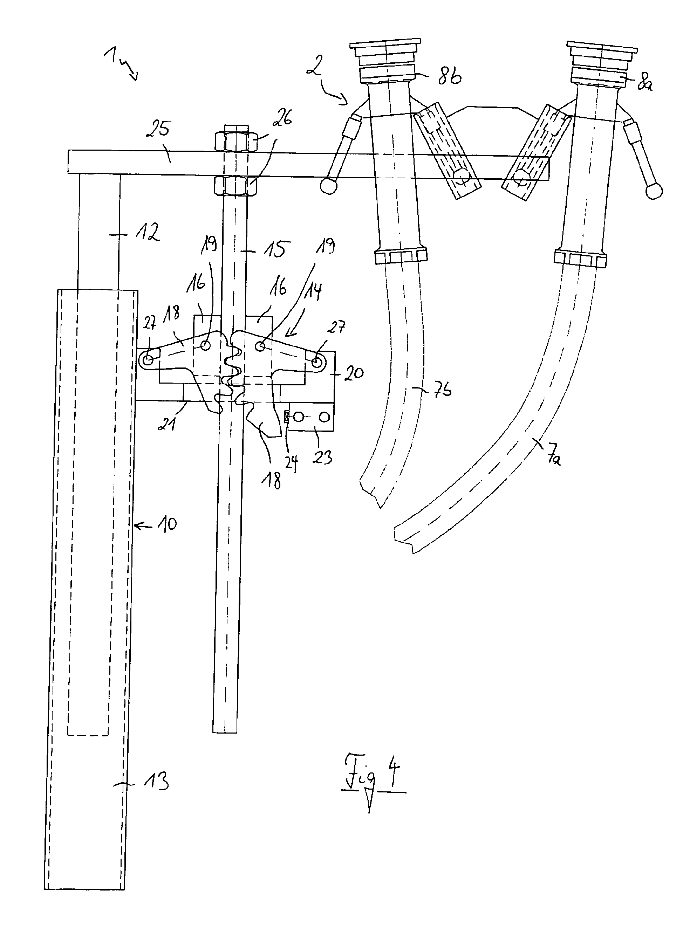

Die Bremsbacken 16 weisen an ihrer Innenfläche jeweils einen Bremsbelag 22 aus Gummi auf. Die Stützstange 15 ist als Gewindestange ausgebildet, um die Reibung zwischen der Stützstange 15 und den Bremsbacken 16 zu erhöhen.
An der Halterung 21 ist ferner einer Pneumatikzylinder 23 angeordnet, dessen Zylinderstange 24 an der linken Zahnplatte 18 angreifen kann (siehe insbesondere die Figuren 3 und 4). Im hier dargestellten verriegelten Zustand des Bremsmoduls 14 hat die Zylinderstange 24 keinen Kontakt mit der Zahnplatte 18.

Wie bereits oben dargelegt, kann der Stützmast 10 passiv - insbesondere durch Mitnahme durch eine Hubbühne - ausgezogen werden, indem die erste Teleskopstufe bzw. die zweite Teleskopstufe aus der Basishülse 13 des Stützmastes 10 gezogen wird. Beim Herausziehen der ersten Teleskopstufe 11 aus der Basishülse 13 wird auch die Stützstange 15 mit der ersten Teleskopstufe 11 mitgenommen und gleitet zwischen den Bremsbacken 16 mit nach oben. In der Regel befindet sich das Bremsmodul 14 beim Ausziehen des Stützmastes 10 in einer entriegelten Stellung, in welcher die Bremsbacken 16 keinen Kontakt mit der Stützstange 15 haben, um unnötigen Abrieb der Bremsbeläge zu vermeiden. Es ist jedoch auch möglich und sehr vorteilhaft, dass die Stützstange 15 auch im hier dargestellten verriegelten Zustand nach oben aus den Bremsbacken gezogen werden kann. Dies ist insbesondere dann wichtig, wenn eine Hubbühne den Stützmast im verriegelten Zustand kontaktiert und nach oben drückt. In diesem Fall muss die Stützstange aus den Bremsbacken gleiten können, um Beschädigungen zu vermeiden.

Ein Betankungsvorgang mit der erfindungsgemäßen Betankungsvorrichtung 1 läuft in der Regel folgendermaßen ab:
Eine Bedienperson ("Tankwart") fährt mit einer Hubbühne, die in der Regel an einem Tankfahrzeug befestigt ist, nach oben in Richtung des Tragflügels eines Flugzeuges, an welchem in der Regel der Tankeinlass angeordnet ist. Beim Hochfahren der Hubbühne kontaktiert diese die erste ausziehbare Teleskopstufe 12 des Stützmastes (in der Regel an der Unterseite einer an dieser Teleskopstufe angeordneten Platte) und nimmt diese mit nach oben, so dass der Stützmast 10 ausgezogen wird. Beim Ausziehen des Stützmastes 10 sind die Bremsmodule 14 entriegelt, d. h., die Pneumatikzylinder 23 mit Druck beaufschlagt, so dass die Zylinderstangen 24 die jeweiligen Zahnplatten kontaktieren.
Wird dann von der Bedienperson auf der Hubbühne eine Betankungskupplung 8a, 8b von einer Haltevorrichtung entnommen, erhalten die Pneumatikzylinder 23 das Signal, drucklos zu werden, so dass die Zylinderstangen einfahren und die jeweiligen Zahnplatten 18 nicht mehr kontaktieren. Durch das Eigengewicht des Pantographen kommt es automatisch zu einer Verriegelung der Bremsmodule 14, so dass der Hubmast stabil im ausgefahrenen Zustand verbleibt und die Hubbühne mit der Bedienperson ohne Einziehen des Hubmastes nach unten gefahren werden kann, so dass die Person vom Boden aus den Betankungsvorgang starten und steuern kann. Durch die Belastung der Stützstange 15 durch das Eigengewicht des Pantographen 2 werden die Bremsbacken 16 durch die Reibung zwischen der Stützstange 15 und den Bremsbacken 16 leicht nach unten gedrückt. Durch die Tatsache, dass die Bremsbacken 16 mit den Zahnplatten 18 verbunden sind, werden auch diese Zahnplatten 18 nach unten gedrückt. Durch den hier vorhandenen Kniehebeleffekt der Zahnplatten, bedingt durch das feste Lager 27 der Zahnplatten 18 an den Halteblöcken 20 und dem beweglichen Lager 19 der Zahnplatten 18 an den Bremsbacken 16, werden auch die Bremsbacken durch das nach unten Drücken der Zahnplatten 18 stärker zusammengedrückt, so dass sich die Bremswirkung stark erhöht. In diesem belasteten und damit verriegelten Zustand des Stützmastes 10 können die Bremsmodule nicht entriegelt werden.
Im fixierten Zustand des Stützmastes 10 sind also sämtliche Bremsmodule 14 der einzelnen Teleskopstufen 11, 12 wirksam (verriegelt), wodurch der Stützmast 10 selbständig die Abstützung des Pantographen 2 übernimmt. Dies hat unter anderem den Vorteil, dass sehr kurze Schlauchleitungen 7a, 7b verwendet werden können und die Zugbelastung an den Betankungskupplungen 8a und 8b beim Betanken des Flugzeuges gering ist.
Ist der Betankungsvorgang abgeschlossen fährt die Bedienperson mit der Hubbühne wieder nach oben unter den Tragflügel des Flugzeugs, wodurch die Hubbühne den Stützmast 10 aus seiner Stützposition übernimmt. Hierbei ist es unerheblich, ob der Kontaktpunkt zwischen der Hubbühne und dem Stützmast 10 genau erreicht oder in der Höhe überfahren wird. Entscheidend ist, dass ohne zeitliche Abhängigkeit einer Steuerung ein Überfahren der Berührungsposition geschehen kann, da - wie bereits oben dargelegt - die Stützstange 15 auch im verriegelten Zustand der Bremsmodule 14 nach oben aus den Bremsbacken 16, die an der Stützstange 15 anliegen, gezogen werden kann. Dies ist deshalb möglich, da beim Hinausziehen der Stützstange 15 im verriegelten Zustand der Bremsmodule die Bremsbacken 16 leicht nach oben mitgenommen werden (wegen der Reibung zwischen der Stützstange 15 und den Bremsbacken 16). Dadurch kommt es zur Entlastung der kniehebelangelenkten Bremsbacken 16, wodurch der Kniehebeleffekt der Zahnplatten 18 abnimmt und die Bremsbacken 16 nicht mehr stark an die Stützstange 15 gedrückt werden.
Ein großer Vorteil dieser Konstruktion besteht darin, dass beim Erreichen einer neuen Höhenposition ohne weitere Signalgebung oder Steuerungseinflüsse eine Fixierung des Stützmastes 10 in dieser Position erfolgen kann und die Hubbühne zu jeder Zeit wieder nach unten gefahren werden kann.

Sind nun alle Betankungskupplungen 8a, 8b wieder in ihrem Halter platziert, erhalten die Pneumatikzylinder 23 ein Signal aktiv zu werden und die Bremsmodule 14 durch Kontaktieren der jeweiligen Zahnplatte 18 zu entriegeln. Damit die Bremsmodule tatsächlich entriegelt werden, muss ebenfalls ein Berührungssignal von der Hubbühne mit dem Stützmast 10 an die Steuerung ergehen. Als weitere Sicherungsmaßnahme ist es erforderlich, dass mit der Hubbühne der Stützmast 10 eine bestimmte Strecke nach oben mitgeschleppt wird. Nur dann ist der Kniehebelverschluss der Zahnplatten 18 entlastet und die durch die Signale freigeschalteten Pneumatikzylinder 23 können die Bremsmodule entriegeln. Wird der Stützmast 10 von der Bühne nicht erreicht oder nur knapp berührt, wird ein Öffnen der Bremsbacken durch das Eigengewicht des Pantographen über die Kniehebelwirkung der Bremsbackenanlenkung (Zahnplatten 18) verhindert. D. h., es muss durch die Hubbühne eine Entlastung des Stützmastes 10 zwangsweise erfolgen.

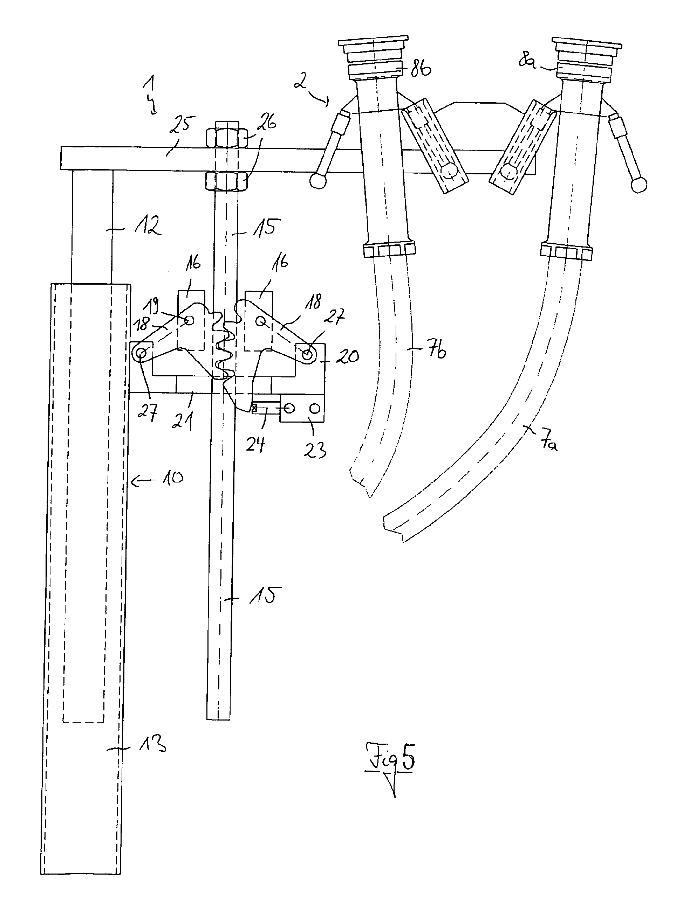

Figuren 4 und 5 zeigen eine schematische Darstellung der Betankungsvorrichtung 1 im verriegelten (Figur 3) bzw. entriegelten (Figur 4) Zustand. Die Stützstange 15 ist in diesen Figuren an einer Haltekonsole 25 mit Hilfe von Muttern 26 befestigt. Die Haltekonsole 25 ist mit der zweiten Teleskopstufe 12 fest verbunden und dient gleichzeitig zur Befestigung verschiedener Teile des Pantographen 2. Gut zu erkennen ist in dieser Darstellung die Position der Zylinderstange 24 des Pneumatikzylinders 23 im entriegelten bzw. verriegelten Zustand des Bremsmoduls 14.

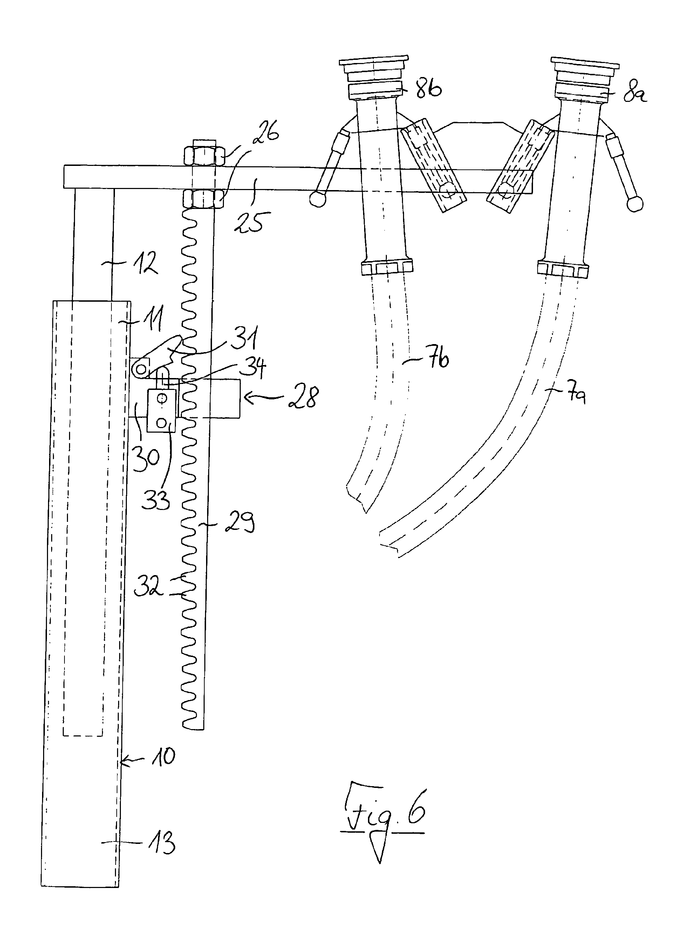

Figur 6 zeigt einen Stützmast 10 mit einer weiteren Ausführungsform eines Bremsmoduls 28, umfassend eine mit der bewegbaren Teleskopstufe 12 des Stützmastes 10 verbundene und mit dieser bewegbare Zahnstange 29. Das Bremsmodul 28 umfasst ferner eine an einer Haltevorrichtung 30 schwenkbar gelagerte Arretierungsklappe 31. Die Haltevorrichtung 30 ist in Form eines Halteblocks ausgebildet, welcher fest an der Basishülse 13 des Stützmastes 10 angeordnet ist. Die Zahnstange 29 ist bei dieser Ausführungsform an der Haltekonsole 25 mit Hilfe von Muttern 26 befestigt. Die Haltekonsole 25 ist mit der zweiten Teleskopstufe 12 fest verbunden und dient gleichzeitig zur Befestigung verschiedener Teile des Pantographen 2. Im hier dargestellten entriegelten Zustand greift die Arretierungsklappe 31 nicht zwischen die Zähne 32 der Zahnstange 29 ein. In dieser Stellung kann die Teleskopstufe 12 sowohl ein- als auch ausgefahren werden. Ein Betankungsvorgang mit der dargestellten Vorrichtung läuft ähnlich dem Betankungsvorgang, welcher im Rahmen der Figur 2 beschrieben ist, ab: Eine Bedienperson fährt mit einer Hubbühne nach oben in Richtung des Tragflügels eines Flugzeuges. Beim Hochfahren der Hubbühne kontaktiert diese die erste ausziehbare Teleskopstufe 12 und nimmt diese mit nach oben. Beim Ausziehen des Stützmastes 10 ist das Bremsmodul 28 entriegelt, das heißt, die Arretierungsklappe 31 greift nicht in die Zahnstange 29 ein.

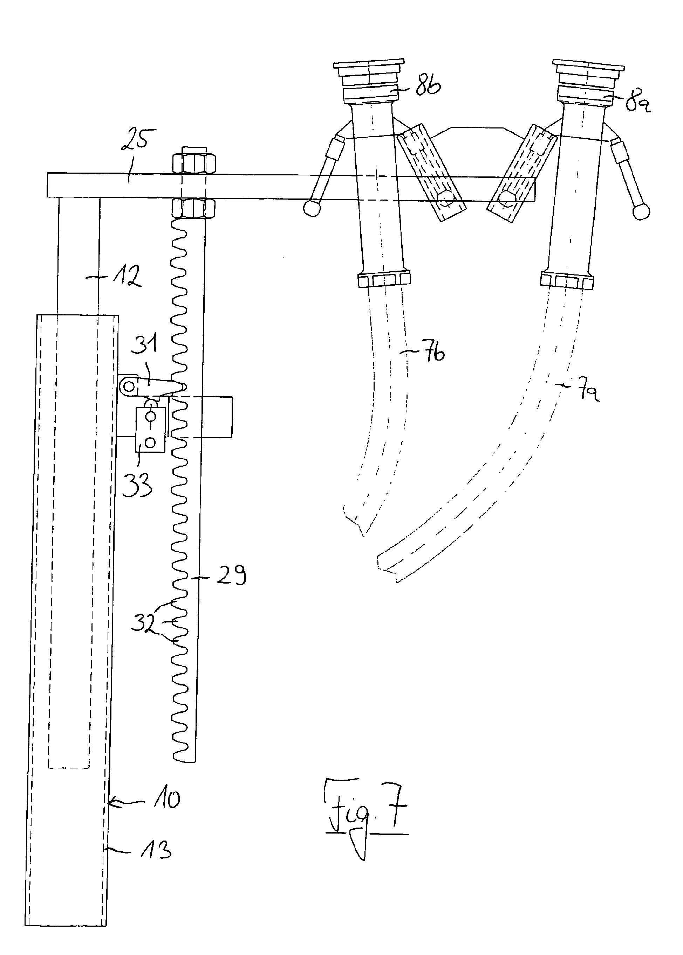

Wird dann von der Bedienperson auf der Hubbühne eine Betankungskupplung 8a, 8b von einer Haltevorrichtung entnommen, erhält ein Pneumatikzylinder 33, welcher im entriegelten Zustand mit Druck beaufschlagt ist und die Arretierungsklappe 31 nach oben drückt, den Befehl, Druck loszuwerden, so dass die Zylinderstange 34 einfährt und die Arretierungsklappe 31 in eine im Wesentlichen horizontale Stellung klappt. In dieser im Wesentlichen horizontalen Stellung greift die Arretierungsklappe zwischen zwei Zähne 32 der Zahnstange 29 ein und verriegelt den Mechanismus. In diesem in Figur 7 gezeigten verriegelten Zustand wird der Stützmast 1 fest in dieser Stellung gehalten, so dass die Hubbühne nach unten fahren kann.

Ist der Betankungsvorgang abgeschlossen, fährt die Bedienperson mit der Hubbühne wieder nach oben unter den Tragflügel des Flugzeugs, wodurch die Hubbühne den Stützmast 10 aus seiner Stützposition übernimmt. Bei dieser Ausführungsform ist es unerheblich, ob der Kontaktpunkt zwischen der Hubbühne und dem Stützmast genau erreicht oder in der Höhe überfahren wird: Entscheidend ist auch hier, dass ohne zeitliche Abhängigkeit einer Steuerung ein Überfahren der Berührungsposition geschehen kann.

Sind dann alle Betankungskupplungen 8a, 8b wieder in ihrem Halter platziert, erhält der Pneumatikzylinder 33 ein Signal aktiv zu werden und das Bremsmodul 28 durch Kontaktieren und nach oben Drücken der Arretierungsklappe 31 zu entriegeln.

## Patentansprüche

1. Stützmast (10) zum Abstützen und Verfahren eines Pantographen (2), wobei der Stützmast teleskopartig ausziehbar ist und im teilweise oder ganz ausgezogenen Zustand in dieser Position über mindestens einen Bremsmechanismus (14, 28) fixierbar ist.

2. Stützmast nach Anspruch 1, **dadurch gekennzeichnet, dass** dieser passiv, vorzugsweise mit Hilfe einer Hubbühne ausziehbar ist und vorzugsweise keinen eigenen Antrieb aufweist.

3. Stützmast nach einem der Ansprüche 1 oder 2, **dadurch gekennzeichnet, dass** dieser im fixierten Zustand nicht absenkbar (einziehbar), vorzugsweise jedoch weiter ausziehbar ist.

4. Stützmast nach einem der vorhergehenden Ansprüche, **gekennzeichnet durch** mindestens ein Bremsmodul (14), umfassend eine mit einer bewegbaren Teleskopstufe (11, 12) des Stützmastes (10) verbundene und mit dieser bewegbare Stützstange (15) sowie zwei an die Stützstange anpressbare Bremsbacken (16), wobei jede Bremsbacke mit einer Zahnplatte (18) verbunden ist, welche Zahnplatten ineinandergreifend angeordnet sind und die Bremsbacken, insbesondere bei Belastung der Stützstange **durch** das Eigengewicht des Pantographen (2), an die Stützstange (15) pressen können.

5. Stützmast nach Anspruch 4, **dadurch gekennzeichnet, dass** die Zahnplatten (18) als Kniehebel auf die Bremsbacken (16) wirken.

6. Stützmast nach einem der Ansprüche 4 oder 5, **dadurch gekennzeichnet, dass** mindestens eine, vorzugsweise eine Zahnplatte (18) mit einem Betätigungsmittel, vorzugsweise einem Pneumatikzylinder (23) betätigbar ist, welches Betätigungsmittel die Zahnplatten und damit auch die Bremsbacken (16) von einem verriegelten in einen entriegelten Zustand und vorzugsweise auch umgekehrt überführen können.

7. Stützmast nach einem der Ansprüche 4 bis 6, **dadurch gekennzeichnet, dass** das Betätigungsmittel (23) über eine Steuerung betätigbar ist, wobei das Betätigungsmittel insbesondere durch das Entnehmen eines Betankungsstutzens (8a, 8b) von einer Haltestation das Signal erhält, die Zahnplatte (18) nicht mehr zu betätigen, und wobei das Betätigungsmittel vorzugsweise durch ein Signal durch die Berührung einer Hubbühne am Stützmast (10) oder Pantographen (2) den Befehl erhält, die Zahnplatte zu betätigen und den Bremsmechanismus zu entriegeln.

8. Stützmast nach einem der Ansprüche 4 bis 7, **dadurch gekennzeichnet, dass** die Bremsbacken (16) einen reibungserhöhenden Bremsbelag (22), insbesondere einen Gummibelag aufweisen, wobei die Stützstange (15) vorzugsweise keine glatte Oberfläche aufweist, sondern z. B. als Gewindestange ausgebildet ist.

9. Stützmast nach einem der Ansprüche 4 bis 8, **dadurch gekennzeichnet, dass** die Stützstange (15) auch im verriegelten Zustand der Zahnplatten (18) und Bremsbacken (16) nach oben aus den Bremsbacken gezogen werden kann.

10. Stützmast nach einem der Ansprüche 1 bis 3, **gekennzeichnet durch** mindestens ein Bremsmodul (28), umfassend eine mit einer bewegbaren Teleskopstufe (12) des Stützmastes (10) verbundene und mit dieser bewegbare Zahnstange (29) sowie ein schwenkbar gelagertes, in die Zahnstange eingreifbares Arretierungselement (31), welches zur Überführung des Bremsmodules von einem entriegelten Zustand in einen verriegelten Zustand mit der Zahnstange verrastet.

11. Betankungsvorrichtung (1), insbesondere zum Betanken von Flugzeugen, mit einem Pantographen (2), umfassend mindestens eine Rohrleitung (3a, 3b), mindestens eine Schlauchleitung (7a, 7b) sowie mindestens einen an der mindestens einen Schlauchleitung angeordneten Betankungsstutzen (8a, 8b), und mit einem Stützmast (10) nach einem der Ansprüche 1 bis 10.
